# EUROPEAN PATENT APPLICATION

(11) **EP 4 659 891 A1**
(43) Date of publication of application: **10.12.2025**
(21) Application number: 24750290.9
(22) Date of filing: 30.01.2024
(51) Int. Cl.: B23K 26/14, B23K 26/21, H02K 15/04

(54) **LASER WELDING APPARATUS, AND LASER WELDING METHOD**

(30) Priority: 31.01.2023 JP 2023012431
(71) Applicant: FURUKAWA ELECTRIC CO., LTD., Tokyo 100-8322 (JP); NITTOKU Co., Ltd., Saitama-city, Saitama 3300841 (JP)
(72) Inventor: KADOWAKI, Hiroto, Saitama-city, Saitama 330-0841 (JP); TSURUDA, Shuma, Saitama-city, Saitama 330-0841 (JP); SEGAWA, Masayoshi, Saitama-city, Saitama 330-0841 (JP); MURAYAMA, Taro, Tokyo 100-8322 (JP); SHIGEMATSU, Takashi, Tokyo 100-8322 (JP)
(74) Representative: Grünecker Patent- und Rechtsanwälte PartG mbB
(86) International application number: PCT/JP2024/002852
(87) International publication number: WO 2024/162341

(57) **Abstract**

A laser welding apparatus (20) includes: a fixing tool (22) configured to fix a welding target workpiece (11); a laser irradiation device (30) configured to melt welding required part (10) of the welding target workpiece (11) by laser light emitted from a laser head (30); an inert-gas nozzle (41, 42) configured to blow inert gas onto the welding required part (10) to be melted; a moving mechanism (25) configured to move the welding target workpiece (11) together with the fixing tool (22) after the laser light is irradiated to the welding required part (10) by the laser irradiation device (30); and a downstream-side gas nozzle (44) configured to blow inert gas onto the welding required part (10) that has been irradiated with the laser light after the welding target workpiece (11) has been moved.

## Description

### TECHNICAL FIELD

The present invention relates to a laser welding apparatus and laser welding method for welding by irradiating laser light.

### BACKGROUND ART

As means for welding a welding required part of a welding target workpiece, a laser welding apparatus that performs welding by irradiating laser light is known. Because metal that has been melted by irradiation of the laser light undergoes oxidation if it comes into contact with air before it is cooled, nitrogen gas, etc. is blown onto the metal in order to prevent the oxidation.

JP7-171690A discloses an apparatus in which a laser emission port for emitting laser light is covered by an outer cylinder, and nitrogen gas is supplied to the inside of the outer cylinder to blow nitrogen gas to a welding part from around the emission port. With such a laser welding apparatus, the blown nitrogen gas shields the welding part from the air, and thereby, the metal that has been melted by the irradiation of the laser is prevented from coming into contact with the air.

As the welding target workpiece to be welded by such a welding apparatus that emits the laser light, rotating electrical machines such as motors, generators, motor generators, and so forth used in electric vehicles, etc. are known. The stator of the rotating electrical machine described in JP2022-36296A is manufactured by arranging the coils in the stator core, and in order to achieve a relatively large torque, a rectangular wire having a substantially rectangular cross-sectional shape is used for the coils.

In the manufacturing process of the rotating electrical machine, the welding apparatus is used for manufacturing the coils. The rectangular wire is formed into a wave shape in advance such that it can be arranged in the stator core. A plurality of coil segments each having the wave shape are arranged in the stator core in advance, and a single coil is formed by connecting end portions of the plurality of coil segments to achieve electrical conduction. The connection of the end portions of the coil segments is performed by welding using laser light.

### SUMMARY OF INVENTION

As in the laser welding apparatus described in JP7-171690A, when the laser welding apparatus employs a so-called XY laser, in which the laser head is moved to the welding part and emits the laser light, it is effective to cover the laser emission port with the outer cylinder.

However, when the laser welding apparatus employs the XY laser, after the welding part is melted by the irradiation of the laser light, when the laser head is moved to next welding part, the blowing of nitrogen gas onto the welding part is also moved to the next welding part. Therefore, if cooling of the welding part melted earlier is not completed, such a welding part comes into contact with air and is oxidized.

On the other hand, as a laser irradiation device, a so-called galvano laser which changes an emission angle of the laser light emitted from the laser head without moving the laser head is also known.

In a case in which the galvano laser is employed, rapid irradiation of the laser light to a plurality of welding parts can be expected. However, because an irradiation range of the laser is wide in the galvano laser, it is difficult to provide the outer cylinder that covers the entire irradiation range of the laser light, and prevention of oxidation of all of the welding parts remains an issue.

Especially, in a case in which the welding target workpiece is the rotating electrical machine to be installed in electric vehicles, etc., because end portions of a relatively large number of coil segments mounted on the stator core are to be welded successively, it is required to repeat welding operations multiple times while preventing oxidation of the welding parts, and development of such technology is expected.

An object of the present invention is to provide a laser welding apparatus and a laser welding method that enables rapid welding while preventing oxidation of a welding part.

According to one aspect of the present invention, a laser welding apparatus includes: a fixing tool configured to fix a welding target workpiece; a laser irradiation device configured to melt welding required part of the welding target workpiece by laser light emitted from a laser head; an inert-gas nozzle configured to blow inert gas onto the welding required part to be melted; a moving mechanism configured to move the welding target workpiece together with the fixing tool after the laser light is irradiated to the welding required part by the laser irradiation device; and a downstream-side gas nozzle configured to blow inert gas onto the welding required part that has been irradiated with the laser light after the welding target workpiece has been moved.

According to another aspect of the present invention, a laser welding method for performing welding by moving a welding target workpiece having a plurality of welding required parts and by irradiating laser light to the welding required parts while blowing inert gas, the welding required parts being configured to successively face the laser head as the welding target workpiece is moved, the laser welding method includes a step of blowing the inert gas continuously onto the welding required parts, not only during irradiation of the laser light, but also while and after the welding target workpiece is being moved after irradiation.

### BRIEF DESCRIPTION OF DRAWINGS

[FIG. 1] FIG. 1 is a sectional view showing a laser welding apparatus according to an embodiment of the present invention and is a sectional view taken along a line A-A in FIG. 10.
[FIG. 2] FIG. 2 is a diagram showing a state in which welding required parts have been moved from the state shown in FIG. 1.
[FIG. 3] FIG. 3 is a sectional view taken along a line B-B in FIG. 1.
[FIG. 4] FIG. 4 is a sectional view taken along a line E-E in FIG. 1.
[FIG. 5] FIG. 5 is a sectional view taken along a line C-C in FIG. 9.
[FIG. 6] FIG. 6 is a sectional view taken along a line D-D in FIG. 10 showing arrangement of the welding required parts.
[FIG. 7] FIG. 7 is a front view showing a fixing tool in which a stator that is a welding target workpiece is supported.
[FIG. 8] FIG. 8 is a perspective view of the stator that is the welding target workpiece.
[FIG. 9] FIG. 9 is a front view of the laser welding apparatus according to the embodiment of the present invention.
[FIG. 10] FIG. 10 is a side view of the laser welding apparatus according to the embodiment of the present invention.

### DESCRIPTION OF EMBODIMENTS

In the following, an embodiment of the present invention will be described with reference to the drawings.

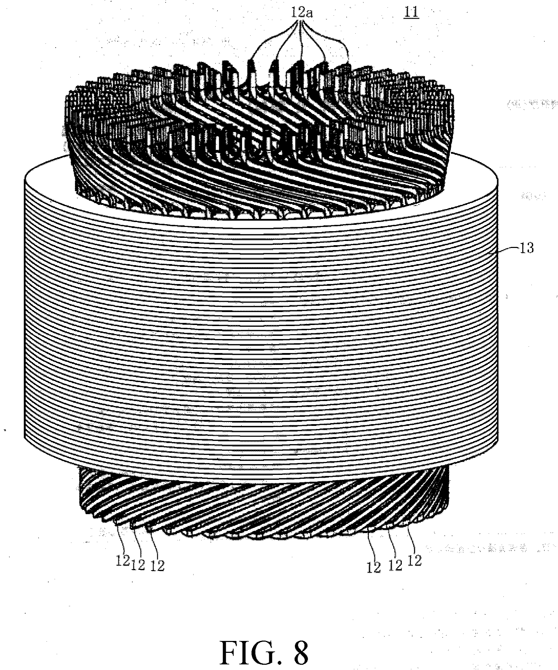

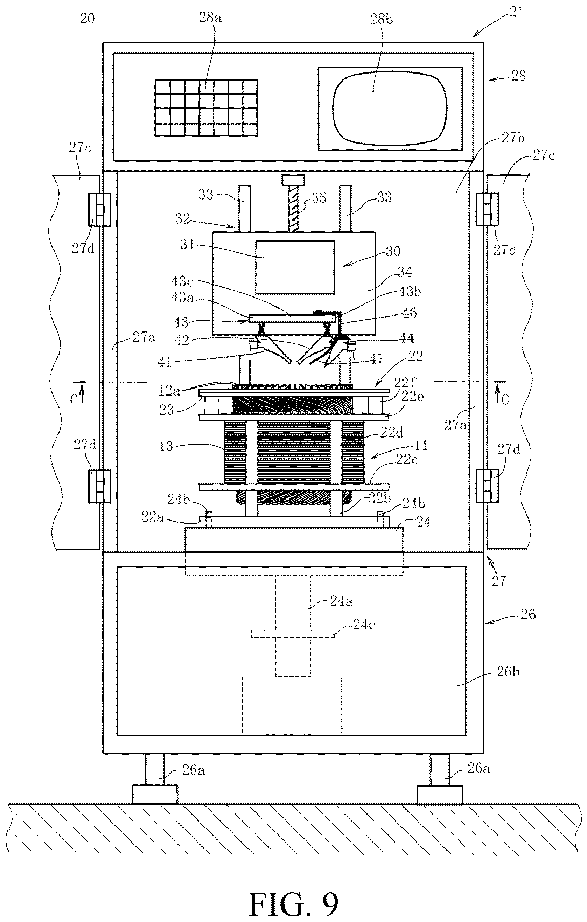

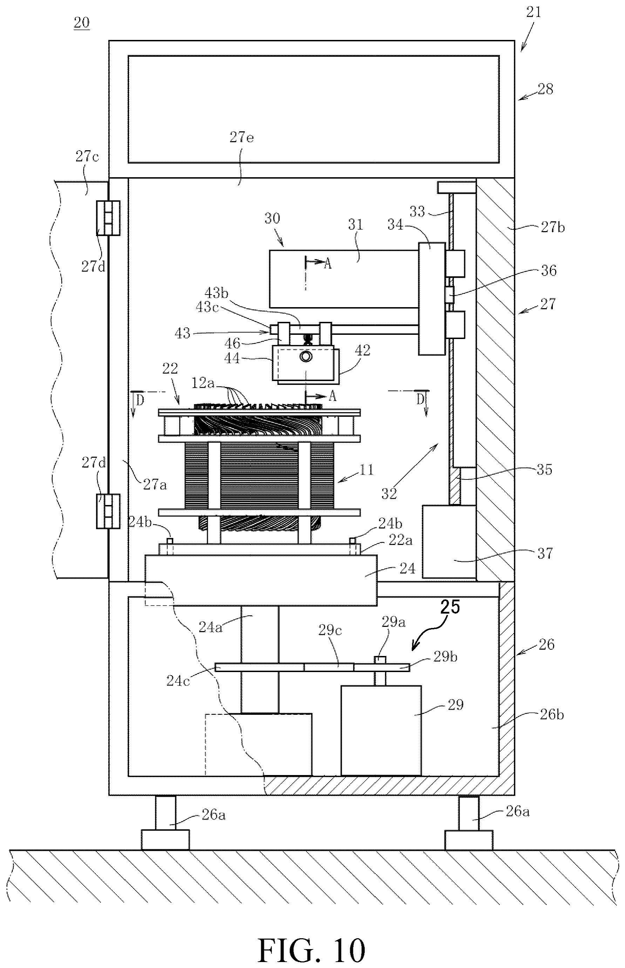

FIGs. 9 and 10 show a laser welding apparatus 20 according to the embodiment of the present invention. The laser welding apparatus 20 includes a fixing tool 22 serving as fixing means for fixing a welding target workpiece in a housing 21. The figures show a case in which the welding target workpiece in this embodiment is a stator 11 of a rotating electrical machine to be installed in electric vehicles, etc., and FIG. 8 shows an inner-rotor-type stator 11. Note that, in the present invention, the welding target workpiece is not limited to the stator 11.

The stator 11 is configured by arranging a plurality of coil segments 12 in a stator core 13. The plurality of coil segments 12 are each formed to have a wave shape such that a rectangular wire having a substantially rectangular cross-sectional shape can be inserted into each of slots. The slots are formed so as to extend in an inner circumference of the stator core 13 in the axial direction. The plurality of coil segments 12 respectively are inserted and arranged in the slots such that end portions 12a are positioned upward.

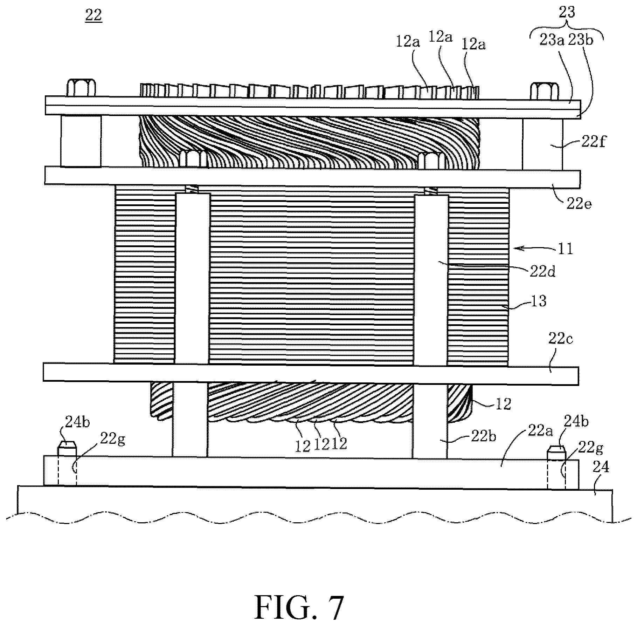

FIG. 7 shows the fixing tool 22 for fixing the stator 11 having the plurality of coil segments 12 and the stator core 13 to which the plurality of coil segments 12 are mounted. The fixing tool 22 supports and fixes the stator 11 such that the center axis of the stator 11 extends in the vertical direction.

The fixing tool 22 in this embodiment includes: a base plate 22a; a core support plate 22c that is provided on the base plate 22a via short support columns 22b and supports the stator core 13 from below by placing an end surface (a lower surface) of the stator core 13 on an upper surface of the core support plate 22c; a core pressing plate 22e that is provided on the core support plate 22c via intermediate support columns 22d and that clamps the stator core 13 with the core support plate 22c; and a holding plate 23 that is provided on the core pressing plate 22e via upper support columns 22f.

In a state in which the stator core 13 is clamped between the core support plate 22c and the core pressing plate 22e, the end portions 12a of the coil segments 12 arranged in the stator core 13 project upward from an upper surface of the stator core 13. The holding plate 23 holds and fixes the end portions 12a of the plurality of coil segments 12, which project out from above the stator core 13, such that the positions of the end portions 12a of the coil segments 12 can be determined and it is possible to weld the end portions 12a.

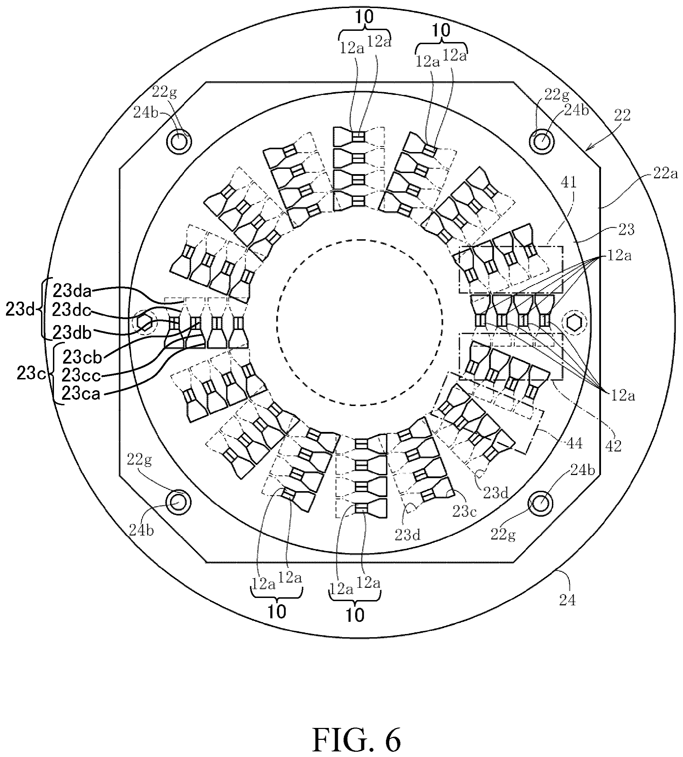

In the above, as shown in FIG. 8, in the stator 11 that is the welding target workpiece, the coil segments 12 are arranged in the stator core 13 in plural numbers in the circumferential direction and the coil segments 12 are arranged such that a plurality of coil segments 12 are overlapped also in the radial direction. A pair of end portions 12a that are arranged in an overlapped state form each of welding required parts 10 to be welded. As shown in FIG. 6, a plurality of welding required parts 10 (the pairs of end portions 12a) are arranged linearly in the radial direction passing through the center of the rotation of the stator 11 in a consecutive manner at predetermined intervals, and at the same time, the plurality of welding required parts 10, which are arranged in the radial direction in a consecutive manner, are also arranged consecutively in the circumferential direction. The holding plate 23 fixes all of the end portions 12a to be welded. As described above, the fixing tool 22 fixes the welding target workpiece such that the plurality of welding required parts 10 are arranged linearly in a consecutive manner at predetermined intervals.

The holding plate 23 includes two stacked plates: an upper holding plate 23a and a lower holding plate 23b (see FIG. 7). As shown in FIG. 6, the upper holding plate 23a and the lower holding plate 23b are respectively formed with holes 23c and holes 23d through which the pairs of end portions 12a of the coil segments 12 are respectively inserted in a overlapped state. Each of the holes 23c has a large hole 23ca whose width in the radial direction of the stator 11 is large, a small hole 23cb whose width in the radial direction of the stator 11 is smaller than that of the large hole 23ca, and a connecting hole 23cc that connects the large hole 23ca and the small hole 23cb. The holes 23d have the same shape as the holes 23c, and similarly to the holes 23c, each of the holes 23d has a large hole 23da, a small hole 23db, and a connecting hole 23dc. A plurality of holes 23c and a plurality of holes 23d are formed at predetermined intervals in the radial direction of the stator 11 and are also formed at predetermined intervals in the circumferential direction. The holes 23c and the holes 23d are formed to have opposite orientations to each other. FIG. 6 shows a state in which the small holes 23cb of the holes 23c and the small holes 23db of the holes 23d communicate with each other in the axial direction of the stator 11, and the pairs of end portions 12a, which are overlapped with each other, are respectively inserted through the small holes 23cb and the small holes 23db.

The upper holding plate 23a and the lower holding plate 23b are configured so as to be rotatable in mutually opposite directions. From a state in which one of the pair of end portions 12a is positioned in the large hole 23ca of the hole 23c in the upper holding plate 23a, and the other of the pair of end portions 12a is positioned in the large hole 23da of the hole 23d in the lower holding plate 23b, the upper holding plate 23a and the lower holding plate 23b are rotated in the mutually opposite directions. As a result, in the hole 23c in the upper holding plate 23a, the one of the pair of end portions 12a is guided from the connecting hole 23cc to the small hole 23cb and comes into contact with an end portion of the small hole 23cb. At the same time, in the hole 23d in the lower holding plate 23b, the other of the pair of end portions 12a is guided from the connecting hole 23dc to the small hole 23db and comes into contact with an end portion of the small hole 23db. As a result, as shown in FIG. 6, a state in which the pair of end portions 12a are inserted into the small hole 23cb and the small hole 23db is achieved, and thereby, the pair of end portions 12a come into close contact with each other, and the position of the pair of end portions 12a is fixed in the circumferential direction of the stator 11. In this way, a plurality of welding required parts 10 (the pairs of end portions 12a) are arranged consecutively in the radial direction of the stator 11 at predetermined intervals, and the plurality of welding required parts 10, which are arranged consecutively in the radial direction, are arranged consecutively also in the circumferential direction.

As shown in FIGs. 9 and 10, a rotating base 24, on which the fixing tool 22 is attached, is provided in the housing 21. The housing 21 includes: a lower main body 26, to which attachment legs 26a are attached to a lower part thereof, and that is surrounded by a peripheral wall 26b; a welding region portion 27 that is provided above the lower main body 26; and an upper main body 28 that is further provided above the welding region portion 27 and that has an operation panel 28a, a display 28b, and so forth, which are provided on a front face of the upper main body 28 (see FIG. 9).

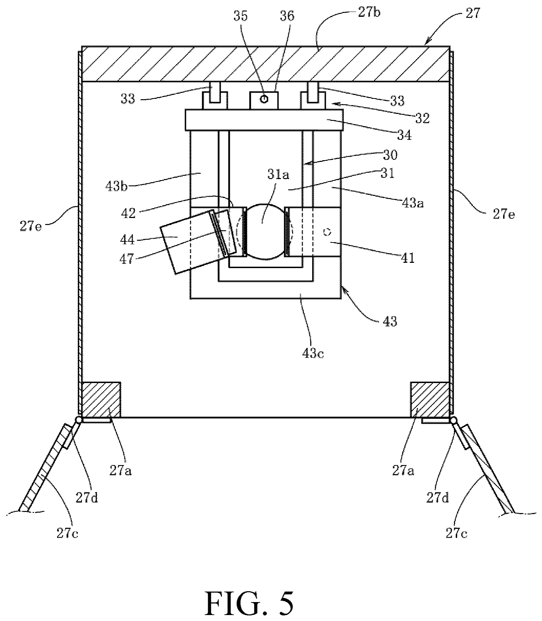

As shown in FIG. 10, the welding region portion 27 has a back plate 27b on its rear surface. The back plate 27b is erected on an upper part of a rear surface of the lower main body 26, and support columns 27a are erected on both sides of an upper part of a front face of the lower main body 26. A translucent resin door 27c is attached to the support columns 27a via hinges 27d, and the door 27c is configured to be able to open and close the space between the support columns 27a. As shown in FIG. 5, the spaces between a side surface of the back plate 27b and the support columns 27a are closed by translucent side walls 27e, and thereby, the welding region portion 27 is configured such that an interior thereof is visible.

As shown in FIG. 10, the rotating base 24 is horizontally attached to an upper end of a vertical shaft 24a, and the vertical shaft 24a is vertically supported inside the lower main body 26. The rotating base 24 is provided so as to be positioned at the boundary between the lower main body 26 and the welding region portion 27, and an upper surface of the rotating base 24 is formed to have a flat surface such that the base plate 22a of the fixing tool 22 can be placed thereon. On the upper surface of the rotating base 24, pins 24b for positioning the base plate 22a are provided so as to project upward.

As shown in FIG. 7, in the base plate 22a of the fixing tool 22, pin holes 22g through which the pins 24b are inserted are formed. By respectively inserting the pins 24b into the pin holes 22g in the base plate 22a, the fixing tool 22 is mounted at a correct position on the rotating base 24.

As shown in FIG. 10, the laser welding apparatus 20 in this embodiment includes a moving mechanism 25 serving as moving means for rotating the stator 11 together with the fixing tool 22. The moving mechanism 25 has: a motor 29 that is provided in the lower main body 26 so as to be adjacent to the rotating base 24; sprockets 24c and 29b that are provided on the vertical shaft 24a of the rotating base 24 and a rotating shaft 29a of the motor 29, respectively; and a chain 29c that connects the sprockets 24c and 29b.

When the motor 29 is driven and the rotating shaft 29a is rotated, the rotation is transmitted to the rotating base 24 via the chain 29c, and the fixing tool 22 mounted on the rotating base 24 and the stator 11 fixed to the fixing tool 22 are rotationally moved.

The fixing tool 22 is installed coaxially on the rotating base 24. By rotating the fixing tool 22 by the motor 29, the welding required parts 10, which are arranged consecutively in the circumferential direction, are moved in the circumferential direction.

The laser welding apparatus 20 includes a laser irradiation device 30. The laser irradiation device 30 has a laser head 31 that is attached above the fixing tool 22 and the stator 11. The laser irradiation device 30 melts the welding required part of the welding target workpiece by the laser light emitted from the laser head 31. The laser irradiation device 30 has a laser oscillator (not shown), a fiber serving as an optical path for transmitting the generated laser, and the laser head 31 in which a focusing system that focuses and emits the laser transmitted via the fiber is built.

In this embodiment, as shown in FIG. 10, a configuration in which the laser head 31 is attached via a lifting and lowering mechanism 32 serving as lifting and lowering means is illustrated. The lifting and lowering mechanism 32 will be described. To the back plate 27b in the welding region portion 27 of the housing 21, a pair of linear motion guide rails 33 are attached with a predetermined space in the width direction so as to extend in the vertical direction, and a lifting and lowering member 34 is attached to the linear motion guide rails 33 so as to be movable up and down.

As shown in FIGs. 5 and 10, between the pair of linear motion guide rails 33, a vertical rotating shaft 35 is rotatably provided in parallel with the pair of linear motion guide rails 33. An external thread is formed on a surface of the vertical rotating shaft 35, a vertical movement part 36 is threadedly engaged with the vertical rotating shaft 35 by means of a ball screw, and the vertical movement part 36 is attached to the lifting and lowering member 34.

As shown in FIG. 10, a vertical driving source 37 for rotationally driving the vertical rotating shaft 35 is arranged on the back plate 27b. As the vertical driving source 37, for example, a servomotor capable of high-precision control is used. By rotating the vertical rotating shaft 35 by the vertical driving source 37, the vertical movement part 36, which is threadedly engaged with the vertical rotating shaft 35, is lifted and lowered together with the lifting and lowering member 34.

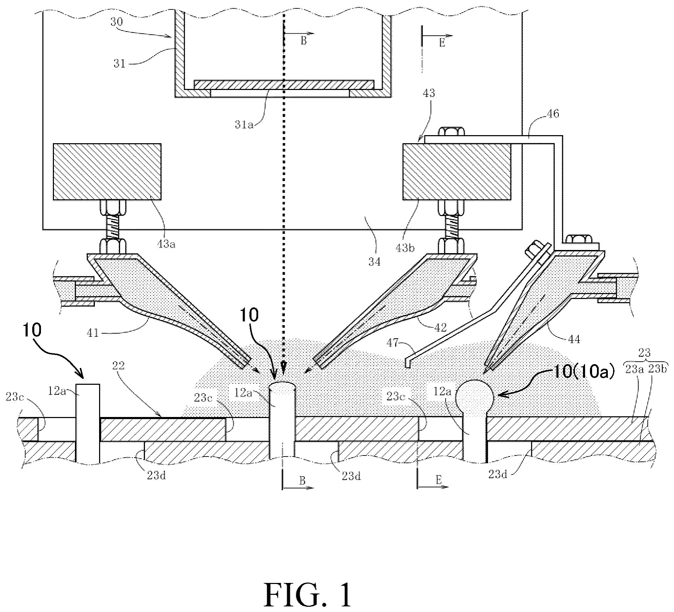

A housing of the laser head 31 has a box shape and is attached to the lifting and lowering member 34. In a lower surface of the laser head 31, an emission window 31a that allows the laser light to pass through is provided (see FIGs. 1 to 3). Inside the laser head 31, a reflector device is provided together with the focusing system.

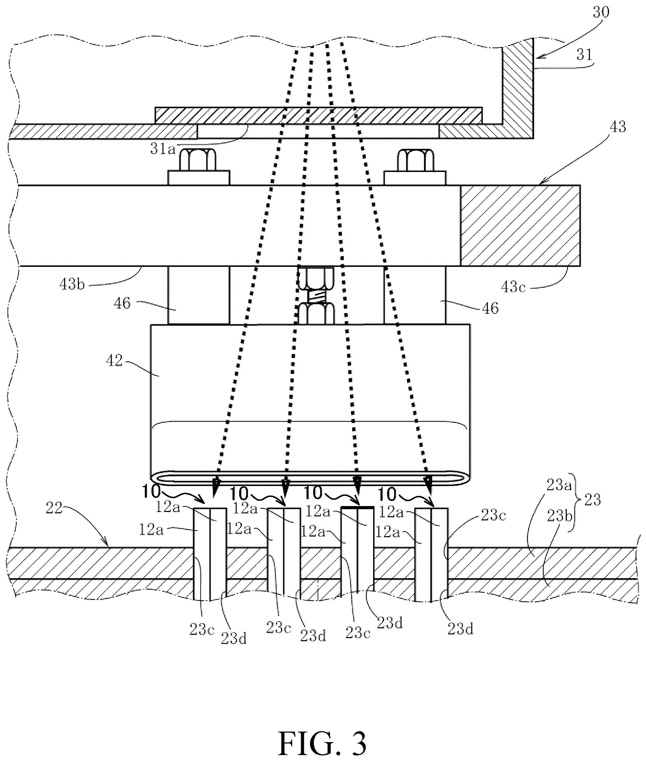

The laser irradiation device 30 is capable of changing the emission direction in the laser head 31 by reflecting the laser light. As shown by the dotted arrows in FIG. 3, the laser irradiation device 30 is configured to move the laser light emitted from the laser head 31 in the radial direction of the fixing tool 22 so as to be able to successively weld the pairs of end portions 12a of the coil segments 12, which are the welding required parts 10 arranged next to each other in the radial direction.

As shown in FIGs. 1, 2, and 5, the laser welding apparatus 20 includes inert-gas nozzles 41 and 42 that simultaneously blow inert gas onto all of the plurality of welding required parts 10, which are arranged linearly in a consecutive manner. In this embodiment, the inert-gas nozzles 41 and 42 are respectively provided, via attachment member 43, on both sides of the plurality of linearly consecutive welding required parts 10.

As shown in FIG. 5, the attachment member 43 is attached to the lifting and lowering member 34 below the laser head 31. The attachment member 43 is provided so as to surround the emission window 31a of the laser head 31. The attachment member 43 has side pieces 43a and 43b that are provided on both sides of the emission window 31a such that the emission window 31a is placed therebetween, and a connecting piece 43c that connects projecting ends of both of the side pieces 43a and 43b. Base ends of both of the side pieces 43a and 43b are attached to the lifting and lowering member 34.

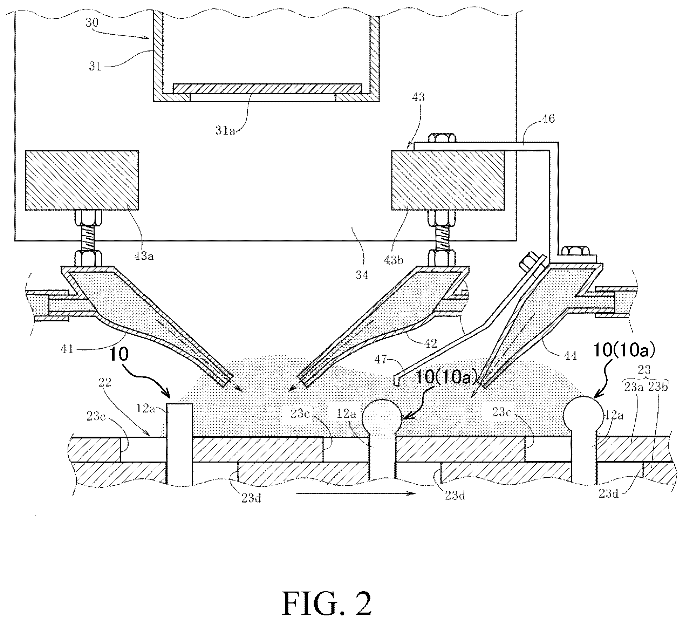

As shown in FIGs. 1 and 2, a pair of inert-gas nozzles 41 and 42 are respectively provided on both of the side pieces 43a and 43b. The pair of the inert-gas nozzles 41 and 42 are provided so as to sandwich the plurality of welding required parts 10 from both sides, i.e. from both the upstream side and the downstream side in the rotating direction of the welding required parts 10 arranged in a linearly consecutive manner in the radial direction of the stator 11. The pair of the inert-gas nozzles 41 and 42 are provided such that discharge ports are provided at an obliquely inclined angle so as to be capable of respectively blowing the inert gas onto the welding required parts 10 from above at an obliquely angle.

In each of the pair of inert-gas nozzles 41 and 42, the discharge port is formed as an elongated hole so as to be able to simultaneously blow the inert gas onto all of the linearly consecutive welding required parts 10 (see FIG. 3).

The laser welding apparatus 20 includes: the moving mechanism 25 that moves the stator 11 fixed by the fixing tool 22 after the laser light is irradiated to the welding required parts 10 by the laser irradiation device 30; and a downstream-side gas nozzle 44 that blows the inert gas onto the welding required parts 10 (welded parts 10a in FIG. 1) that have been irradiated with the laser light after the stator 11 has been moved by the moving mechanism 25. In this embodiment, the moving mechanism 25 is a rotationally moving mechanism serving as rotationally moving means that rotates the stator 11 within a horizontal plane.

The downstream-side gas nozzle 44 is attached to the attachment member 43. As shown in FIG. 1, the downstream-side gas nozzle 44 is attached to the side piece 43b of the attachment member 43 via a stay 46 so as to be arranged alongside the inert-gas nozzle 42 that is provided on the downstream side in the rotating direction (the moving direction) of the stator 11. After the stator 11 is rotationally moved, the downstream-side gas nozzle 44 blows the inert gas onto the welding required parts 10, which have been irradiated with the laser light, from the downstream side toward the upstream side in the rotating direction of the stator 11. The downstream-side gas nozzle 44 is provided at an obliquely inclined angle so as to be capable of blowing the inert gas onto the welding required parts 10, which have been irradiated with the laser light, from above at an obliquely angle.

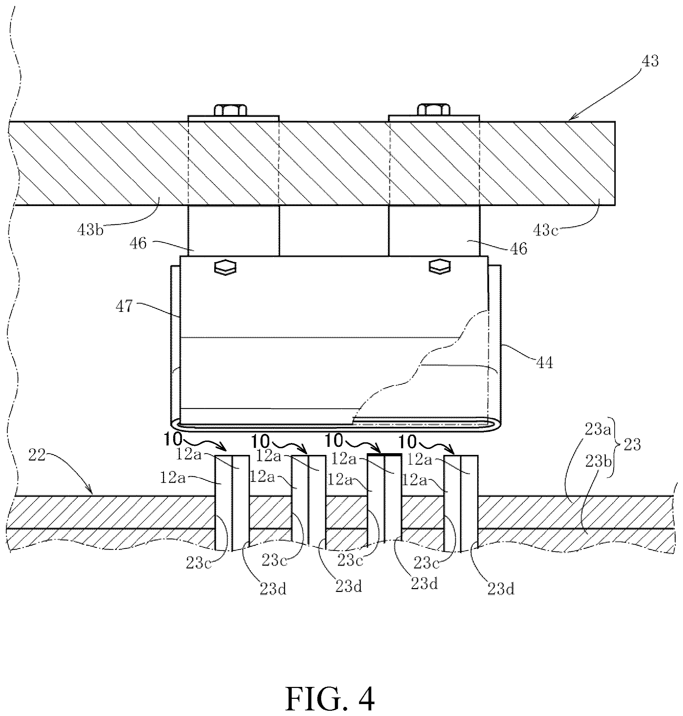

In the downstream-side gas nozzle 44, the discharge port thereof is formed as an elongated hole so as to be able to simultaneously blow the inert gas onto all of the welding required parts 10 arranged in a linearly consecutive manner in the radial direction (see FIG. 4).

A shielding plate 47 is provided between the inert-gas nozzle 42 provided on the downstream side and the downstream-side gas nozzle 44. Specifically, the shielding plate 47 is attached to the downstream-side gas nozzle 44. The shielding plate 47 is adjusted so as to stop the flow of the inert gas blown out from the downstream-side gas nozzle 44 on the upstream side in the rotating direction such that the inert gas blown out from the downstream-side gas nozzle 44 does not disturb the inert gas blown out from the inert-gas nozzles 41 and 42.

In other words, the shielding plate 47 in this embodiment partitions between the inert-gas nozzle 42 provided on the downstream side and the downstream-side gas nozzle 44, thereby preventing the inert gas blown out from the downstream-side gas nozzle 44 from excessively intruding toward the upstream side.

Next, a welding method using the laser welding apparatus 20 will be described.

In this embodiment, the welding target workpiece is the stator 11 of the rotating electrical machine shown in FIG. 7, the plurality of coil segments 12 having the wave shape are arranged in the stator core 13 in advance, and the end portions 12a of the plurality of coil segments 12 are welded by the laser welding apparatus 20 so as to achieve electrical conduction. In the following, a specific description will be provided.

First, the stator core 13, in which the coil segments 12 are arranged, is attached to the fixing tool 22. Such attachment is achieved by, as shown in FIG. 7, placing the stator core 13 on the core support plate 22c, and clamping the stator core 13 by the core support plate 22c and the core pressing plate 22e. Subsequently, the pairs of end portions 12a, serving as the welding required parts 10, of the coil segments 12 projecting from the upper part of the stator core 13 are held and fixed by the holding plate 23 as described above.

Next, the fixing tool 22, to which the stator 11 is attached, is attached to the rotating base 24. Such attachment is achieved by, as shown in FIGs. 9 and 10, opening the door 27c of the housing 21 and by installing the base plate 22a of the fixing tool 22 onto the rotating base 24 by respectively inserting the pins 24b of the rotating base 24 into the pin holes 22g in the base plate 22a (see FIG. 6). Subsequently, the door 27c is closed and the welding operation is started. The welding operation is performed by operating the operation panel 28a on the upper main body 28 (see FIG. 9).

When the welding target workpiece is the stator 11, as shown in FIG. 6, the welding required parts 10 (the pairs of end portions 12a) of the coil segments 12 to be welded are arranged in plurality in the radial direction, and the plurality of welding required parts 10 arranged in the radial direction are also arranged in plurality in the circumferential direction. Welding of the welding required parts 10, which are arranged as described above, by using the laser welding apparatus 20 is performed as described below. First, the plurality of welding required parts 10, which are arranged in the radial direction, are successively welded by the laser irradiation device 30. Thereafter, the fixing tool 22 is rotated together with the stator 11, and the succeeding welding required parts 10, which are circumferentially adjacent to the previously welded parts, are positioned below the laser head 31. Then, the plurality of welding required parts 10 arranged in the radial direction, which are located below the laser head 31, are successively welded by the laser irradiation device 30. By repeating such steps, welding of the welding required parts 10 is performed.

As shown in FIG. 3, welding of the plurality of welding required parts 10, which are arranged consecutively in the radial direction, is performed by successively irradiating the laser light by the laser irradiation device 30 to each of the welding required parts 10. At this time, the laser irradiation device 30 successively welds the plurality of welding required parts 10, which are arranged consecutively in the radial direction, by moving the laser light emitted from the laser head 31 in the radial direction of the fixing tool 22 as shown by the dotted arrows in FIG. 3, without moving the laser head 31.

When the plurality of welding required parts 10, which are arranged consecutively in the radial direction, are to be welded, as shown in FIG. 1, the inert gas is blown out from the inert-gas nozzles 41 and 42 to all of the plurality of welding required parts 10, which are arranged consecutively in the radial direction. With this inert gas, oxidation of the end portions 12a of the coil segments 12, which are melted by the irradiation of the laser light, due to contact with oxygen is prevented.

After welding of the plurality of welding required parts 10, which are arranged consecutively in the radial direction, is finished, the moving mechanism 25 (see FIG. 10) rotationally moves, together with the fixing tool 22, the stator 11 as shown by the solid arrow in FIG. 2, and thereby, the succeeding welding required parts 10 circumferentially adjacent to the welded parts 10a, which have been subjected to welding, are positioned below the laser head 31, and then, the moving mechanism 25 stops the rotational movement of the stator 11. Thereafter, the plurality of welding required parts 10 arranged in the radial direction, which are now positioned below the laser head 31, are welded successively.

As described above, with the welding method using the laser welding apparatus 20, the stator 11 is moved such that the welding required parts 10 are caused to face the laser head 31 successively, and the laser light is irradiated to melt the welding required parts 10, which are caused to face the laser head 31 successively, while blowing the inert gas onto the welding required parts 10.

The laser welding method in this embodiment is characterized in that the inert gas is continuously blown onto the melted welding required parts 10, not only during the irradiation of the laser light, but also while and after the stator 11 is being moved following the irradiation of the laser light.

As described above, the blowing of the inert gas during melting by irradiation of the laser light is performed by the inert-gas nozzles 41 and 42. In this embodiment, as shown in FIG. 1, because the inert-gas nozzles 41 and 42 are respectively provided on both sides of the plurality of linearly consecutive welding required parts 10, the inert gas is blown out from both sides of the welding required parts 10. With such a configuration, because formation of a region onto which the inert gas is not blown is prevented, the surroundings of the welding required parts 10 (the end portions 12a of the coil segments 12), which are melted by the irradiation of the laser light, are covered with the inert gas, and thereby, it is possible to effectively prevent the oxidation of the welding required parts 10 during the irradiation of the laser light. In other words, it is possible to effectively prevent the oxidation of the welding required parts 10 during they are being melted by the irradiation of the laser light.

In this embodiment, because the downstream-side gas nozzle 44 is provided separately from the inert-gas nozzles 41 and 42, there is a concern that the inert gas blown out from the downstream-side gas nozzle 44 may disturb the inert gas blown out from the inert-gas nozzles 41 and 42.

However, because the shielding plate 47 is provided between the inert-gas nozzle 42 provided on the downstream side and the downstream-side gas nozzle 44, the inert gas blown out from the inert-gas nozzles 41 and 42 is prevented from being disturbed by the inert gas blown out from the downstream-side gas nozzle 44. Therefore, the surroundings of the welding required parts 10 (the end portions 12a of the coil segments 12), which are melted by the irradiation of the laser light, are reliably covered with the inert gas blown out from the inert-gas nozzles 41 and 42.

As shown in FIG. 2, the blowing of the inert gas during the melted welding required parts 10 are being moved is performed by both of the inert-gas nozzles 41 and 42 and the downstream-side gas nozzle 44. As a result, the inert gas blown out from the inert-gas nozzles 41 and 42 and the downstream-side gas nozzle 44 fills the space along the moving path of the welding required parts 10, and so, the welding required parts 10 are moved along the moving path extending within an atmosphere filled with the inert gas. Thus, even in a case in which cooling of the welding required parts 10 has not been completed, it is possible to prevent the oxidation caused by contact with oxygen.

In this embodiment, because the downstream-side gas nozzle 44 blows the inert gas from above at an obliquely angle from the downstream side toward the upstream side in the rotating direction of the stator 11, the inert gas blown out from the downstream-side gas nozzle 44 flows toward the upstream side. As a result, the inert gas blown out from the downstream-side gas nozzle 44 is guided to a space formed between the downstream-side gas nozzle 44 and the inert-gas nozzles 41 and 42 arranged on the upstream side, and so, it is possible to fill the space along the moving path of the welding required parts 10 with the inert gas.

Because the shielding plate 47 is provided between the inert-gas nozzle 42 provided on the downstream side and the downstream-side gas nozzle 44, the inert gas that has been blown out from the downstream-side gas nozzle 44 toward the upstream side remains in the vicinity of the shielding plate 47. As a result, disturbance of the inert gas blown out from the inert-gas nozzles 41 and 42 can be prevented, and at the same time, the space along the moving path of the welding required parts 10 is filled with the inert gas blown out from the downstream-side gas nozzle 44, and so, it is possible to prevent the oxidation of the moving welding required parts 10 due to contact with oxygen.

As shown in FIG. 1, the blowing of the inert gas after the welding required parts 10, which have been welded (the welded parts 10a), have been moved is performed by the downstream-side gas nozzle 44. In other words, the downstream-side gas nozzle 44 blows the inert gas onto the welding required parts 10 (the welded parts 10a), which have been irradiated with the laser light, after the stator 11 is moved,. As a result, even when the welding required parts 10 (the welded parts 10a) have not been completely cooled and are still in a molten state, it is possible to prevent the oxidation caused by contact with oxygen.

In general, after the welding required parts 10 are melted by the irradiation of the laser light while blowing the inert gas onto the welding required parts 10, as the welding required parts 10 are moved, the inert gas is no longer blown onto the welding required parts 10. In such a case, if the melted welding required parts 10 have not been completely cooled, they come to contact with the air and are oxidized.

However, in the laser welding method in this embodiment, the inert gas is continuously blown onto the welding required parts 10, which have been melted by the laser light, while being melted by the irradiation of the laser light, while being moved, and after being moved. Therefore, the welding required parts 10 are prevented from coming into contact with the air before the cooling of the welding required parts 10 is completed, and so, oxidation of the welding required parts 10 is prevented.

As a result, it becomes possible to move the welding required parts 10 before the cooling of the welding required parts 10, which have been melted, is completed. Thus, as shown in FIG. 1, it is possible to perform welding by irradiating the laser light as a new step to next following welding required parts 10, which have been moved under the laser head 31, and thereby, it becomes possible to perform rapid welding.

Especially, by setting a time period for blowing the inert gas onto the welding required parts 10 (the welded parts 10a), which have been irradiated with the laser light, after the stator 11 has been moved, so as to be equal to or longer than a time period for irradiating the laser light to the welding required parts 10 before the stator 11 is moved, it becomes possible to continuously perform welding of the welding required parts 10 by irradiating the laser light to the welding required parts 10 while constantly blowing the inert gas from the inert-gas nozzles 41 and 42 and the downstream-side gas nozzle 44, and thereby, it becomes possible to perform rapid and oxidation-free welding.

By using the laser irradiation device 30, which successively melts the plurality of welding required parts 10 arranged in a linearly consecutive manner in the radial direction by changing the emission angle of the laser light emitted from the laser head 31, it becomes possible to perform rapid welding of the plurality of welding required parts 10 that are arranged in a consecutive manner in both the radial direction and the circumferential direction. Thus, even when the welding target workpiece is a rotating electrical machine to be installed in an electric vehicle, etc., in which a relatively large number of coil segments 12 are mounted in the stator core 13, it becomes possible to perform rapid welding while preventing oxidation of the end portions 12a of the coil segments.

In a case in which the welding target workpiece is the rotating electrical machine, by repeating such operations to perform welding on all of the welding required parts 10 arranged in a consecutive manner in the radial direction and the circumferential direction, as shown in FIG. 8, in a state in which the plurality of coil segments 12 are arranged in the stator core 13, the electrical conduction is achieved for the end portions 12a of the coil segments 12, and thereby, a single coil is formed. Thereafter, the stator core 13 is removed from the fixing tool 22, and a series of welding operations is completed.

In the above-mentioned embodiment, a configuration in which the shielding plate 47 is attached to the downstream-side gas nozzle 44 was shown. However, this configuration is merely an example, and as long as the inert gas blown out from the inert-gas nozzles 41 and 42 is not disturbed, the shielding plate 47 may be attached to the attachment member 43 or may be attached to the inert-gas nozzle 42 provided on the downstream side.

In addition, in the above-mentioned embodiment, a configuration in which the shielding plate 47 is provided between the inert-gas nozzle 42 provided on the downstream side and the downstream-side gas nozzle 44 was shown. However, in a case in which the inert gas blown out from the inert-gas nozzles 41 and 42 is not disturbed by the inert gas blown out from the downstream-side gas nozzle 44, the shielding plate 47 may not be provided.

According to the above-described embodiment, operational advantages shown below can be afforded.

The laser welding apparatus 20 includes the downstream-side gas nozzle 44 that blows the inert gas onto the welding required parts 10 (the welded parts 10a) after the stator 11 (the welding target workpiece) is moved, and thereby, the inert gas is continuously blown onto the welding required parts 10, not only during the irradiation of the laser light, but also while and after the stator 11 (the welding target workpiece) is being moved after the irradiation of the laser light. As a result, it is possible to prevent the welding required parts 10, which have been melted by the irradiation of the laser light, from being oxidized by coming into contact with oxygen before they are cooled.

In addition, because the downstream-side gas nozzle 44 blows out the inert gas from above at an obliquely angle toward the upstream side from the downstream side in the rotating direction (the moving direction) of the stator 11 (the welding target workpiece), it is possible to fill the space along the moving path of the welding required parts 10 with the inert gas blown out from the downstream-side gas nozzle 44.

In addition, because the shielding plate 47 is provided between the inert-gas nozzle 42 provided on the downstream side and the downstream-side gas nozzle 44, the inert gas that has been blown out from the downstream-side gas nozzle 44 toward the upstream side remains in the vicinity of the shielding plate 47. As a result, disturbance of the inert gas blown out from the inert-gas nozzles 41 and 42 can be prevented, and at the same time, the space along the moving path of the welding required parts 10 is filled with the inert gas, and so, it is possible to prevent the oxidation of the moving welding required parts 10 due to contact with oxygen.

In addition, by setting the time period for blowing the inert gas onto the welding required parts 10 (the welded parts 10a), which have been irradiated with the laser light, after the stator 11 (the welding target workpiece) has been moved, so as to be equal to or longer than the time period for irradiating the laser light to the welding required parts 10 before the stator 11 (the welding target workpiece) is moved, it becomes possible to continuously perform welding of the welding required parts 10 by irradiating the laser light to the welding required parts 10 while constantly blowing the inert gas from the inert-gas nozzles 41 and 42 and the downstream-side gas nozzle 44, and thereby, it becomes possible to perform rapid and oxidation-free welding.

As described above, with the laser welding apparatus 20 in this embodiment, it becomes possible to perform rapid welding while preventing oxidation of the welding required parts 10. In a case in which the welding target workpiece is the stator 11 in which the coil segments 12 are mounted in the slots of the stator core 13, the welding required parts 10 are the end portions 12a of the coil segments 12, and there are relatively large number of the welding required parts 10. However, with the laser welding apparatus 20 in this embodiment, it is possible to rapidly perform welding of the end portions 12a of the coil segments 12, and so, it is possible to significantly reduce the manufacturing time of the stator 11 of a rotating electrical machine.

Embodiments of this invention were described above, but the above embodiments are merely examples of applications of this invention, and the technical scope of this invention is not limited to the specific constitutions of the above embodiments.

This application claims priority based on Japanese Patent Application No.2023-12431 filed with the Japan Patent Office on January 31, 2023, the entire contents of which are incorporated into this specification.

## Claims

1. A laser welding apparatus comprising:
a fixing tool configured to fix a welding target workpiece;
a laser irradiation device configured to melt welding required part of the welding target workpiece by laser light emitted from a laser head;
an inert-gas nozzle configured to blow inert gas onto the welding required part to be melted;
a moving mechanism configured to move the welding target workpiece together with the fixing tool after the laser light is irradiated to the welding required part by the laser irradiation device; and
a downstream-side gas nozzle configured to blow inert gas onto the welding required part that has been irradiated with the laser light after the welding target workpiece has been moved.

2. The laser welding apparatus according to claim 1, wherein
the downstream-side gas nozzle is configured to blow the inert gas from a downstream side toward an upstream side in a moving direction of the welding target workpiece.

3. The laser welding apparatus according to claim 2, wherein
the inert-gas nozzle is provided on each of the upstream side and the downstream side in the moving direction of the welding target workpiece,
a shielding plate is provided between the inert-gas nozzle provided on the downstream side and the downstream-side gas nozzle.

4. The laser welding apparatus according to claim 1, wherein
the moving mechanism is a rotationally moving mechanism configured to rotate the welding target workpiece fixed to the fixing tool within a horizontal plane.

5. The laser welding apparatus according to claim 4, wherein
the fixing tool is configured to be capable of fixing the welding target workpiece such that the welding required part is arranged in a plurality in a radial direction passing through a center of rotation of the welding target workpiece in a consecutive manner at predetermined intervals, and such that the plurality of welding required parts arranged in the radial direction in a consecutive manner are also arranged in a circumferential direction in a consecutive manner at predetermined intervals, and
the laser irradiation device is configured so as to successively melt the plurality of welding required parts arranged in the radial direction in a consecutive manner by changing an emission angle of the laser light emitted from the laser head.

6. The laser welding apparatus according to claim 5, wherein
the welding target workpiece is a stator having a stator core and coil segments mounted in a slot of the stator core, and
the welding required parts are end portions of the coil segments.

7. A laser welding method for performing welding by moving a welding target workpiece having a plurality of welding required parts and by irradiating laser light to the welding required parts while blowing inert gas, the welding required parts being configured to successively face the laser head as the welding target workpiece is moved, the laser welding method comprising
a step of blowing the inert gas continuously onto the welding required parts, not only during irradiation of the laser light, but also while and after the welding target workpiece is being moved after irradiation.

8. The laser welding method according to claim 7, wherein
a time period for blowing the inert gas onto the welding required parts after the welding target workpiece has been moved is equal to or longer than a time period for irradiating the laser light to the welding required parts before the welding target workpiece is moved.
